# EUROPÄISCHE PATENTSCHRIFT

(11) **EP 1 935 782 B1**
(45) Veröffentlichungstag und Bekanntmachung des Hinweises auf die Patenterteilung: **09.06.2010**
(21) Anmeldenummer: 07123008.0
(22) Anmeldetag: 12.12.2007
(51) Int. Cl.: B64C 9/00, B64C 1/20

(54) **Befestigungsschiene zur Befestigung von Ladeeinrichtungen auf dem Ladedeck eines Flugzeugs**
Mounting layer for mounting loading devices on the loading deck of an aircraft
Rail de fixation destiné à la fixation de dispositifs de charge sur le pont de chargement d'un avion

(30) Priorität: 21.12.2006 DE 102006060785
(43) Veröffentlichungstag der Anmeldung: 25.06.2008
(73) Patentinhaber: Telair International GmbH, 83714 Miesbach (DE)
(72) Erfinder: Barauke, Christoph, 83734 Hausham (DE); Patzlsperger, Andreas, 83666 Waakirchen (DE); Huber, Thomas, 83727 Schliersee (DE)
(74) Vertreter: Bohnenberger, Johannes

(56) Entgegenhaltungen:
- EP-A- 0 122 573
- EP-A- 0 881 144
- EP-A- 1 637 449
- US-A- 3 906 870
- US-A- 4 930 612

## Beschreibung

Die Erfindung betrifft eine Befestigungsschiene zur Befestigung von Ladeeinrichtungen, insbesondere Rollen, Riegeln, Rollenantriebseinheiten oder dergleichen Ladeeinrichtungen auf einem Ladedeck eines Flugzeugs.

Im Laderaum eines Flugzeugs, insbesondere eines Großraumflugzeugs werden Container oder Paletten üblicherweise auf Rollenbahnen innerhalb des Laderaums verschoben, die Befestigungsschienen umfassen, welche auf einem Ladedeck des Flugzeugs befestigt sind. Zum Transport dienen weiterhin Rollenantriebseinheiten (allgemein PDUs, Power Drive Units genannt), die meist gesondert auf dem Ladedeck befestigt sind. Weiterhin dienen zum Befestigen der Container bzw. Paletten Riegelelemente, die entweder direkt auf dem Ladedeck, oder aber auch innerhalb dieser genannten Befestigungsschienen angebracht sind. Eine derartige übliche Anordnung ist beispielsweise aus der DE 29 08 400 A1 und EP 0 881 144 A1 bekannt.

Die allgemeine Problematik bei derartigen Anordnungen umfasst mehrere Aspekte. Zunächst wird eine hohe Stabilität der gesamten Anordnung benötigt, da der Ausfall auch nur von einigen der Elemente bzw. Ladeeinrichtungen zu einer Gefährdung führen kann - z.B. wenn Riegelelemente ausfallen - oder zu erheblichen Störungen beim Be- oder Entladen - wenn Rollenantriebseinheiten oder Rollen ausfallen -, was wiederum teure Zeitverzögerungen nach sich zieht. Dennoch müssen aber alle Elemente zum Beladen des Flugzeugs möglichst leicht sein, um ein hohes Nutzlastgewicht zu ermöglichen. Als weiterer Aspekt ist zu berücksichtigen, dass von Flugzeug zu Flugzeug oftmals verschiedene Anforderungen, z.B. in Hinblick auf die Anordnung der Riegelelemente zu erfüllen sind. Oftmals sind auch schon bestehende Einrichtungen umzubauen, um ein Flugzeug - ggf. auch nur für einen einzigen Transport - in geeigneter Weise umzurüsten.

Aus der EP 1 637 449 ist es bekannt, zur Abgrenzung eines zur Aufnahme von Ladeeinrichtungen dienenden Bereichs gesonderte, mit dem Ladedeck verbundenen Schienen vorzusehen. Um die Schienen gegen Verwindungskräfte zu versteifen, sind Profile an diesen angeordnet. Ladeeinheiten können an den Schienen nicht befestigt werden. Somit dienen die Schienen hier eher als Führungs- bzw. Aufnahmeschienen ohne Befestigungswirkung im erfindungsgemäßen Sinne.

Die bekannte Anordnung ist aufwändig konzipiert und in verschiedenen Hinsichten noch nicht optimal.

Der Erfindung liegt die Aufgabe zu Grunde, eine Anordnung aufzuzeigen, mittels derer bei geringem Gewicht eine hohe Stabilität und gleichzeitig variable Verwendbarkeit gewährleistet werden.

Diese Aufgabe wird durch eine Befestigungsschiene nach Anspruch 1 gelöst. Insbesondere wird die Aufgabe durch eine Befestigungsschiene zum Befestigen von Ladeeinrichtungen, insbesondere Rollen, Riegeln, Rollenantriebseinheiten oder dergleichen auf einem Ladedeck eines Flugzeugs gelöst, umfassend eine erste und eine zweite Schiene, wobei jede Schiene eine Seitenwange mit ersten Befestigungseinrichtungen, an denen die Ladeeinrichtungen anbringbar sind, und einen ersten Bodenabschnitt aufweist, an dem die Seitenwange mit einem Unterrand befestigt ist, wobei jeder erste Bodenabschnitt zweite Befestigungseinrichtungen aufweist, über welche der erste Bodenabschnitt auf dem Ladedeck befestigbar ist, wobei die Schienen getrennt voneinander an den Ladeeinrichtungen derart montierbar sind, dass die Schienen nach der Montage der Schienen an den Ladeeinrichtungen und Befestigung der Schienen auf dem Ladedeck über die Ladeeinrichtungen und - ggf. indirekt - das Ladedeck miteinander verbunden sind.

Ein wesentlicher Punkt der Erfindung liegt somit darin, dass die Befestigungsschienen nicht mehr - wie bisher üblich - als U-Profile mit Seitenwänden und einem Boden ausgebildet sind. Dennoch erhält die erfindungsgemäße Befestigungsschiene eine hohe Stabilität dadurch, dass die beiden Schienen, welche die Seitenwände des bisher üblichen U-Profils ersetzen, über die Ladeeinrichtungen selbst miteinander verbunden werden und außerdem die Schienen auf dem Ladedeck ggf. unter Zwischenschaltung eines Befestigungsadapters befestigt sind, wodurch ein äußerst stabiles Kastenprofil entsteht. Dennoch ist dieses leichter, als dies bisher bei derartigen Befestigungsschienen üblich war.

Die ersten Befestigungseinrichtungen sind vorzugsweise derart ausgebildet, dass die Seitenwangen gegeneinander verwindungssteif montierbar sind. Bei einer Ausführungsform der Erfindung umfassen diese ersten Befestigungseinrichtungen relativ großflächige Anlageflächen und Bohrungen, so dass die Ladeeinrichtungen großflächig anliegend an den Schienen befestigt werden können und ggf. auftretende Kräfte sowie Momente gut aufnehmen können.

Die Seitenwangen umfassen vorzugsweise verschiedene Paare von Vertikalwänden, die in verschiedenen Abständen voneinander derart auf den Bodenabschnitten befestigt sind, dass zwischen ihnen Ladeeinrichtungen verschiedener Breiten montierbar sind. Diejenigen Vertikalwände, die nicht aus Stabilitätsgründen benötigt werden oder aus Platzgründen stören, werden entfernt. Somit ist ein Grundsystem vorgegeben, welches durch einfache Materialbearbeitung allen Einbaubedürfnissen anpassbar ist.

Vorzugsweise sind an den Bodenabschnitten, insbesondere parallel gegenüber liegend, Deckabschnitte an Oberrändern der Seitenwangen befestigt. Dadurch ergibt sich eine weitere Versteifung des Profils, wobei die nach Montage nach außen ragenden Ränder der Deckabschnitte vorzugsweise nach unten, in Richtung der Bodenabschnitte gebogen sind. Dadurch ergibt sich zum einen eine verminderte Verletzungsgefahr, zum anderen ergibt sich eine weitere Versteifung des Profils.

Die Schienen sind vorzugsweise einstückig und zwar insbesondere als Strangpressprofile gefertigt. Insbesondere dann, wenn mehrere Vertikalwände vorhanden sind, ist diese Fertigungsart besonderes vorteilhaft. Die Deckabschnitte und die Vertikalwände werden in den Bereichen, in denen Ladeeinrichtungen montiert werden, durch spanabhebende Verformung entfernt, so dass die Ladeeinrichtungen gut Platz finden. Dort, wo aus Stabilitätsgründen Material "überflüssig" ist, wird das überflüssige Material entfernt.

Die Vertikalwände werden dort mit Ausnehmungen versehen, wo ein Zugang von der Seite her z.B. zum Befestigen der Ladeeinrichtungen notwendig ist. Darüber hinaus können auch solche Bereiche, in denen keine Lasten wirken, ebenfalls mit Ausnehmungen versehen werden.

Alle Ausnehmungen sind vorzugsweise derart ausgebildet, dass die Schienen in ihren Abschnitten oberhalb der Bodenabschnitte Außenumrissen der befestigten Ladeeinrichtungen folgend ausgebildet sind. Dadurch wird eine maximale Gewichtsersparnis bei gleich bleibender Stabilität erzielt.

Weiterhin werden die Bodenabschnitte dort breiter dimensioniert, wo der Boden am Ladedeck befestigt ist. Die übrigen Bereiche können zur Gewichtsersparnis schmäler ausgebildet sein.

Die Befestigungseinrichtungen umfassen bei einer bevorzugten Ausführungsform der Erfindung Montageblöcke, die einerseits Befestigungseinrichtungen zum Verbinden mit den Schienen und andererseits Befestigungseinrichtungen aufweisen, welche mit auf dem Ladedeck vorgesehenen Befestigungseinrichtungen verbindbar sind. Diese auf dem Ladedeck vorgesehenen Befestigungseinrichtungen sind beispielsweise "Sitzschienen", in denen entsprechende Klammern angebracht sein können, welche mit den genannten Befestigungsvorrichtungen über Schnellverschlüsse in Eingriff bringbar sind.

Die Vertikalwände werden vorzugsweise in regelmäßigen Abständen mit Bohrungen zur wahlweisen Montage von Ladeeinrichtungen versehen. Insbesondere ist eine derartige Anordnung von Bohrungen zur Aufnahme von Transportrollen sinnvoll, um so durchgehend konstante Abstände zwischen den einzelnen Transportrollen sicher zu stellen, auch dann, wenn an einem dafür vorgesehenen Platz ein Riegelelement ausgebaut wird.

Ein weiterer wesentlicher Grundgedanke der Erfindung besteht darin, dass die Schienen einen Rahmen für bewegbare Teile einer Ladeeinrichtung, insbesondere einer Rollenantriebseinheit oder eines Riegels derart bilden, dass Drehachsen der Ladeeinrichtungen direkt in den Schienen montierbar sind. Es kann somit z.B. eine Rollenantriebseinheit, die üblicherweise einen Rahmen aufweist, in welchem ein nach oben schwenkbares Gehäuse mit den Antriebsrollen montiert ist, ohne diese Rahmen direkt, also ohne den Rahmen in der Befestigungsschiene montiert werden. Dies spart nicht nur Platz, es spart vielmehr auch erhebliches Gewicht. Gleiches gilt natürlich auch für Riegelelemente, wobei ggf. zusätzlich Verstärkungsplatten an den Schienen montiert werden können.

Nachfolgend werden bevorzugte Ausführungsformen der Erfindung anhand von Abbildungen näher beschrieben. Hierbei zeigen
- - Fig. 1: eine Draufsicht auf einen Abschnitt einer Befestigungsschiene mit darin montierten Ladeeinrichtungen;
- - Fig. 2: einen Schnitt entlang der Linie II-II aus Fig. 1;
- - Fig. 3: einen Schnitt entlang der Linie III-III aus Fig. 1;
- - Fig. 4: einen Schnitt entlang der Linie IV-IV aus Fig. 1;
- - Fig. 5: eine Ansicht ähnlich der nach Fig. 1, jedoch einer weiteren Ausführungsform der Erfindung;
- - Fig. 6: einen Schnitt entlang der Linie VI-VI aus Fig. 5;
- - Fig. 7: einen Schnitt entlang der Linie VII-VII aus Fig. 5;
- - Fig. 8: einen Schnitt entlang der Linie VIII-VIII aus Fig. 5;
- - Fig. 9: eine Vorderansicht auf eine Befestigungsschiene mit einer darin montierten Rolle gemäß einer weiteren Ausführungsform der Erfindung;
- - Fig. 10: eine Unteransicht auf die Schiene nach Fig. 1;
- - Fig. 11: eine Seitenansicht der Schiene nach Fig. 9 mit darin montierten weiteren Ladeeinrichtungen;
- - Fig. 12: eine Draufsicht auf die Schiene nach den Fig. 10 oder 11;
- - Fig. 13: eine Explosionsdarstellung eines Abschnittes der Befestigungsschiene nach den Fig. 10 - 12;
- - Fig. 14: eine Explosionsdarstellung eines Endabschnittes der Schiene nach den Fig. 10 - 12 und
- - Fig. 15: eine Explosionsdarstellung eines weiteren Abschnittes der Befestigungsschiene nach den Fig. 10 - 12.

In der nachfolgenden Beschreibung werden für gleiche und gleich wirkende Teile dieselben Bezugsziffern verwendet.

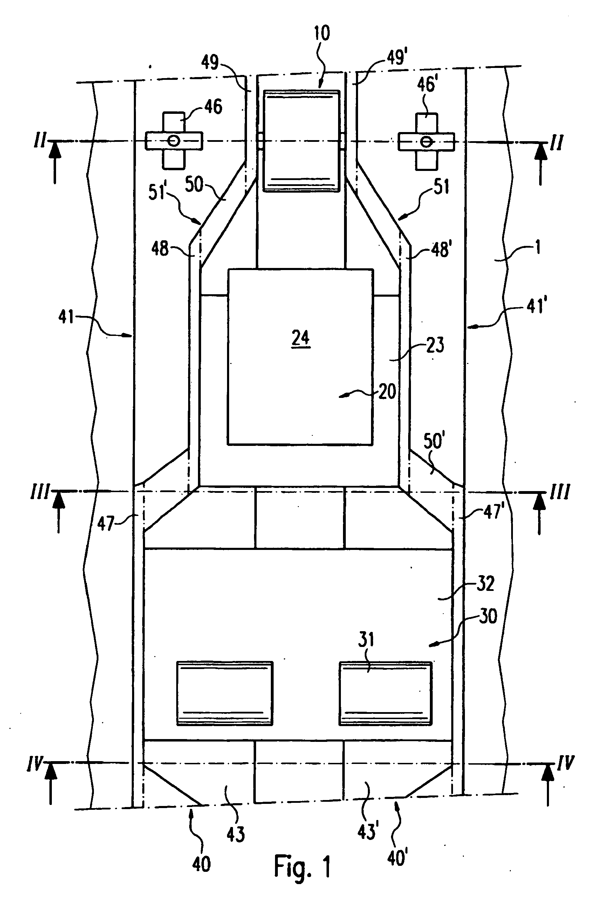

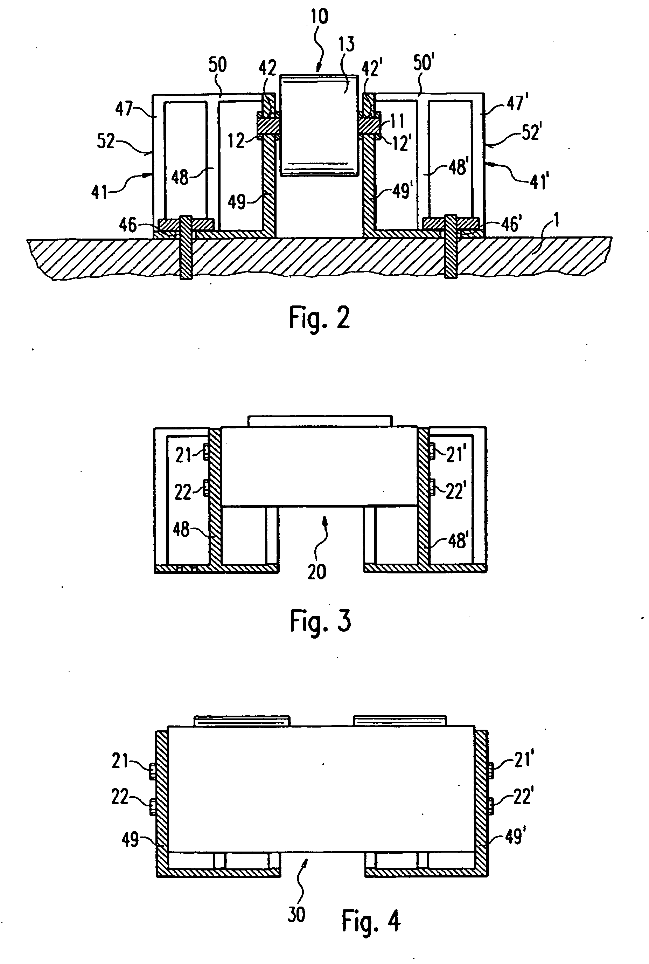

Bei der in den Fig. 1 - 4 dargestellten Ausführungsform der Erfindung ist auf einem Ladedeck 1 eine Befestigungsschiene montiert, welche eine erste Schiene 40 und eine zweite Schiene 40' umfasst. Die Schienen 40, 40' haben jeweils Seitenwangen 41, 41', in denen sich Befestigungseinrichtungen bzw. Bohrungen 42, 42' befinden. In den Bohrungen sind bei dem hier gezeigten Ausführungsbeispiel eine Rolle 10, ein Riegel 20 und eine Rollenantriebseinheit 30 befestigt. Die Rolle 10 ist mit ihrer Welle 11 mit endseitigen Muttern 12, 12' so befestigt, dass sich ihr Rollenkörper 13 drehen kann. Die Welle 11 hat einen Absatz, so dass beim Anziehen der Muttern 12, 12' eine feste und auch verwindungssteife Verbindung zwischen den Seitenwangen 41, 41' stattfindet.

Der Riegel 20 ist über Befestigungsbolzen 21, 21' und 22, 22' mit seinem Rahmen 23 an den Seitenwangen 41, 41' befestigt und weist eine Klaue 24 auf, über welche Container oder Paletten verriegelt werden können. Die Rollenantriebseinheit 30 ist ebenfalls über Befestigungsbolzen 21, 21'; 22, 22' an den Seitenwangen 41, 41' befestigt und weist Antriebsrollen 31 auf.

Die Seitenwangen 41, 41' der Schienen 40, 40' sind bei der hier gezeigten Ausführungsform jeweils einstückig als Strangpressprofile ausgebildet und weisen jeweils einen Bodenabschnitt 43, 43', äußere Vertikalwände 47, 47', mittlere Vertikalwände 48, 48' und innere Vertikalwände 49, 49' auf. An ihren Oberseiten sind die Vertikalwände 47 - 47' durch Deckabschnitte 50, 50' miteinander verbunden.

Auf dem Ladedeck 1 sind die Schienen 40, 40' mittels zweiten Befestigungseinrichtungen 46, 46' fest montiert. Durch diese Anordnung wird somit ein Kastenprofil gebildet, welches zum Ersten die Schienen 40, 40' umfasst, zum Zweiten die Verbindungen der Schienen 40, 40' über die Rollen 10, Riegel 20 und Rollenantriebseinheiten 30 und zum Dritten die Verbindung über das Ladedeck 1.

Die Rollen 10, Riegel 20 und Rollenantriebseinheiten 30 weisen nun verschiedene Breiten auf. Bei der hier gezeigten Ausführungsform sind die Rollen 10 die schmalsten Teile der Ladeeinrichtungen und sind an den inneren Vertikalwänden 49, 49' in den dafür vorgesehenen Bohrungen 42, 42' befestigt.

Die Riegel 20 weisen eine mittlere Breite auf und sind an den mittleren Vertikalwänden 48, 48' befestigt. Um hierfür Platz zu schaffen, sind die inneren Vertikalwände 49, 49' abgefräst. Ebenso sind die mittlere Vertikalwand 48, 48' und die innere Vertikalwand 49, 49' in dem Bereich weggefräst, in dem eine Rollenantriebseinheit 30 montiert ist. Auch die Deckabschnitte 50, 50' sind in den Bereichen weggefräst, in denen sie den Einbau der Rollenantriebseinheit 30 stören würden.

Schließlich sind die Deckabschnitte 50, 50' sowie die äußere Vertikalwand 47, 47' und die mittlere Vertikalwand 48, 48' dort weggefräst, wo eine Zugangsmöglichkeit für die zweiten Befestigungseinrichtungen 46, 46' von oben notwendig ist, mit Hilfe derer die Schienen 40, 40' auf dem Ladedeck 1 befestigt werden.

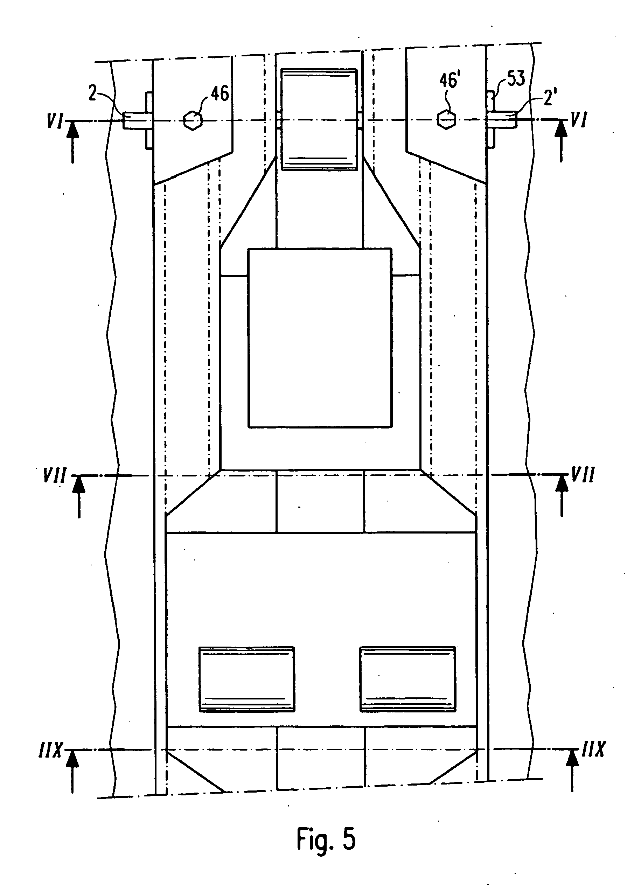

Die in den Fig. 5 - 8 gezeigte Ausführungsform unterscheidet sich von der nach den Fig. 1 - 4 dadurch, dass die Schienen 40, 40' nicht direkt auf das Ladedeck 1 geschraubt sind, sondern über einen Montageblock 53. Hierfür sind die Schienen 40, 40' mittels Schraubbolzen 46, 46', die als zweite Befestigungseinrichtungen dienen, auf dem Montageblock 53 festgeschraubt. Der Montageblock 53 wiederum ist über Befestigungseinrichtungen 2, 2' auf dem Ladedeck 1 befestigt, wobei die Befestigungseinrichtungen 2, 2' standardmäßig auf dem Ladedeck 1 angebracht sind. Bei dieser Ausführungsform der Erfindung werden also zur Montage zunächst die Schienen 40, 40' miteinander über eine Vielzahl von Montageblöcken 53 miteinander verbunden, wobei diese Montage außerhalb des Laderaums geschehen kann.

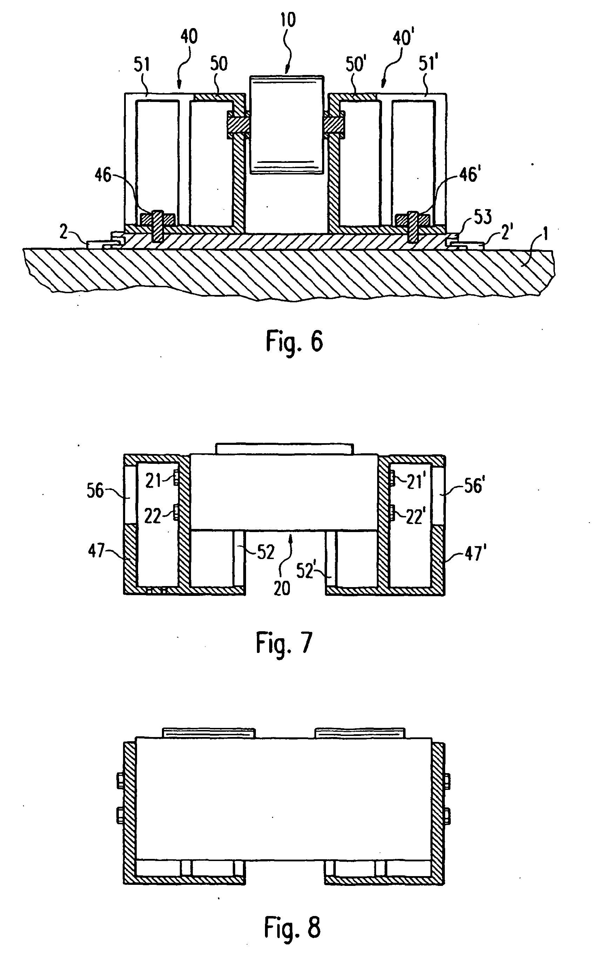

Weiterhin unterscheidet sich die Ausführungsform nach Fig. 5 - 8 von der nach den Fig. 1 - 4 dadurch, dass zur Erhöhung der Stabilität der Schienen 40, 40' nur Teile der Deckabschnitte 50, 50' und der Vertikalwände 47 - 49' entfernt wurden, wie dies insbesondere aus den Fig. 5 - 7 hervorgeht. So werden z.B. gemäß Fig. 7 in den äußeren Vertikalwänden 47, 47' lediglich Zugangsöffnungen 56, 56' vorgesehen, um einen Riegel 20 mittels seiner Befestigungsschrauben 21, 22; 21'; 22' befestigen zu können.

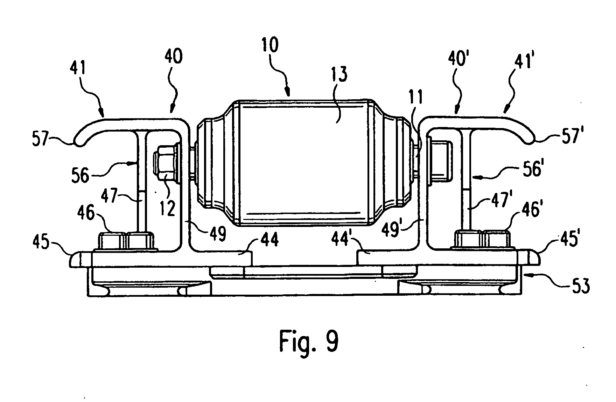

Die in Fig. 9 gezeigte Ausführungsform der Erfindung stellt sozusagen eine Fortsetzung der anhand der Fig. 5 - 8 erläuterten Ausführungsform der Erfindung dar. Wichtig ist hierbei noch die Tatsache, dass die Außenränder 57, 57' der Schienen 40, 40' nach unten abgebogen und abgerundet sind, so dass einerseits die Verletzungsgefahr für das Bedienungspersonal auf dem Ladedeck verringert wird, andererseits auch eine erhebliche Erhöhung der Verwindungssteifigkeit und Biegesteifigkeit der Schienen 40, 40' gegeben ist.

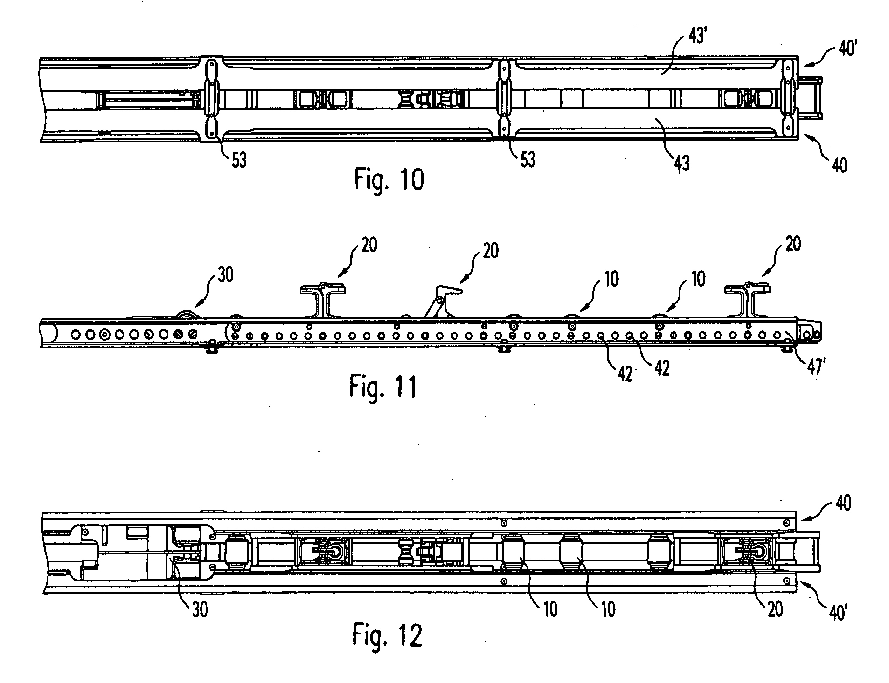

Die Ausführungsform nach Fig. 9 ist in weiteren Details in den Fig. 10 - 15 erläutert.

In Fig. 9 wird aufgezeigt, wie die Schienen 40, 40' mit ihren Bodenabschnitten 43, 43' über die Montageblöcke 53 miteinander verbunden sind. Weiterhin geht aus der Darstellung nach Fig. 10 hervor, dass die Bodenabschnitte 43, 43' an ihren Außenrändern Ausnehmungen aufweisen, so dass eine Gewichtsverminderung stattfindet. In der Seitenansicht nach Fig. 11 oder in der Draufsicht nach Fig. 12 sind die Rollen 10, Riegel 20 und Rollenantriebseinheiten 30 gut erkennbar, sowie die Tatsache, dass eine Vielzahl von Bohrungen 42, 42' vorgesehen ist, so dass eine Vielzahl von Rollen 10 an den Stellen einsetzbar ist, an denen sie benötigt werden, um das Frachtgut korrekt zu befördern.

Zur Erhöhung der Kippstabilität der Schienen 40, 41 sind die Bodenabschnitte 43, 43' - wie insbesondere in Fig. 9 gezeigt - in äußere Schenkel 45, 45' und innere Schenkel 44, 44' unterteilt, wobei nur zwei Vertikalwände, nämlich eine äußere Vertikalwand 47, 47' und eine innere Vertikalwand 49, 49' vorgesehen sind und diese Vertikalwände 47 - 49' etwa symmetrisch innerhalb der Bodenabschnitte 43, 43' angeordnet sind.

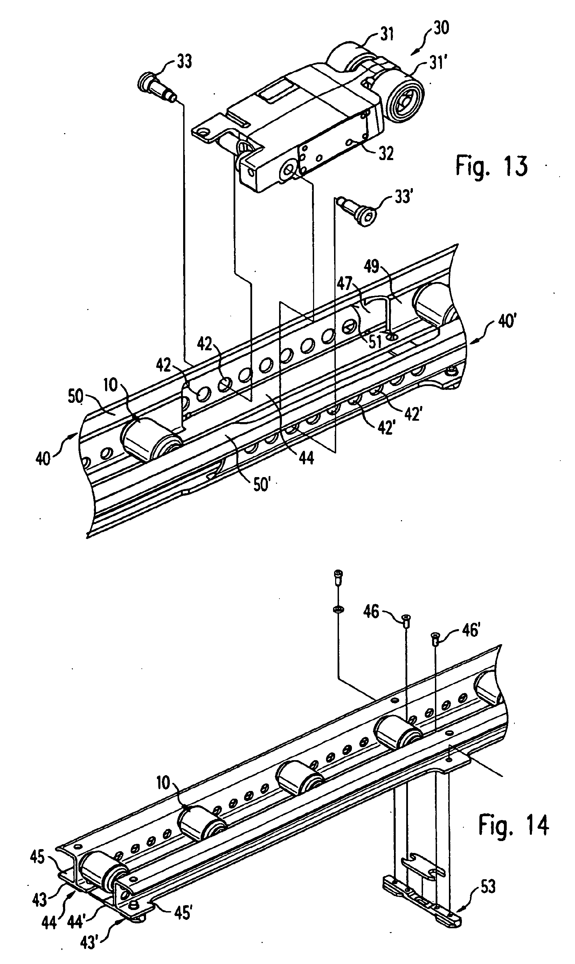

Aus Fig. 13 geht weiterhin hervor, dass die Rollenantriebseinheit 30 keinen eigenen Rahmen aufweist, sie ist vielmehr über Lagerbolzen 43, 43' direkt in den Schienen 40, 40' nach oben und unten verschwenkbar gelagert. Zum Hochheben der Rollenantriebseinheit 30 dient in an sich bekannter Weise eine entsprechende Nockeneinrichtung, welche sich (ebenfalls direkt) auf den Bodenabschnitten 43, 43' bzw. deren inneren Schenkeln 44, 44' abstützen.

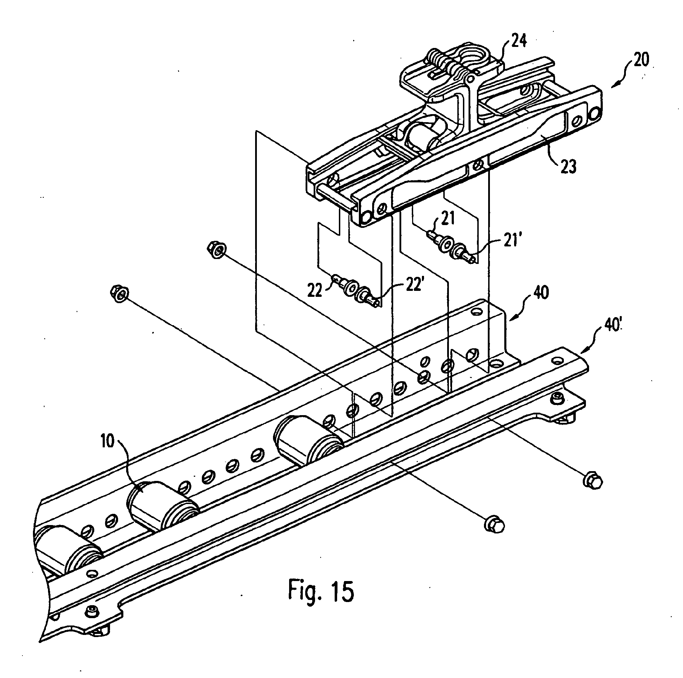

Die Befestigung eines Riegels ist in Fig. 15 genauer gezeichnet. Hierbei ist zu beachten, dass bei einem solchen Riegel 20 der Rahmen 23 auch von den inneren Seitenwänden innerhalb der Schienen 40, 40' gebildet werden könnte.

### Bezugszeichen

- 1: Ladedeck
- 2, 2': Befestigungseinrichtung
- 10: Rolle
- 11: Welle
- 12, 12: Mutter
- 13: Rollenkörper
- 20: Riegel
- 21, 21': Befestigungsbolzen
- 22, 22': Befestigungsbolzen
- 23: Rahmen
- 24: Klaue
- 30: Rollenantriebseinheit
- 31: Rolle
- 32: Schwenkrahmen
- 33, 33': Lagerbolzen
- 40, 40': Schiene
- 41, 41': Seitenwange
- 42, 42': erste Befestigungseinrichtung/Bohrung
- 43, 43': Bodenabschnitt
- 44, 44': innerer Schenkel
- 45, 45': äußerer Schenkel
- 46, 46': zweite Befestigungseinrichtung
- 47, 47': äußere Vertikalwand
- 48, 48': mittlere Vertikalwand
- 49, 49': innere Vertikalwand
- 50, 50': Deckabschnitt
- 51, 51': Ausnehmung Deckabschnitt
- 52, 52': Ausnehmung Vertikalwand
- 53: Vertikalblock
- 56, 56': Zugangsöffnung
- 57, 57': Außenrand

## Patentansprüche

1. Befestigungsschiene zum Befestigen von Ladeeinrichtungen, insbesondere Rollen (10), Riegeln (20) oder Rollenantriebseinheiten (30) auf einem Ladedeck (1) eines Flugzeugs, umfassend eine erste und eine zweite Schiene (40, 40'), wobei jede Schiene eine Seitenwange (41, 41') mit ersten Befestigungseinrichtungen (42, 42'), an denen die Ladeeinrichtungen (10, 20, 30) anbringbar sind, und einen ersten Bodenabschnitt (43, 43') aufweist, an dem die Seitenwange (41, 41') mit einem Unterrand befestigt ist, wobei jeder erste Bodenabschnitt (43, 43') zweite Befestigungseinrichtungen (46, 46') aufweist, über welche der erste Bodenabschnitt (43, 43') auf dem Ladedeck (1) befestigbar ist, wobei die Schienen (40, 40') mit ihren Seitenwangen (41, 41') getrennt voneinander an den Ladeeinrichtungen (10, 20, 30) derart montierbar sind, dass die Schienen (40, 40') nach Montage der Schienen (40, 40') an den Ladeeinrichtungen (10, 20, 30) und Befestigung der Schienen (40, 40') auf dem Ladedeck (1), über die Ladeeinrichtungen (10, 20, 30) und das Ladedeck (1) miteinander verbunden sind.

2. Befestigungsschiene nach Anspruch 1,
**dadurch gekennzeichnet, dass**
die ersten Befestigungseinrichtungen (42, 42') derart ausgebildet sind, dass die Seitenwangen (41, 41') gegeneinander verwindungssteif montierbar sind.

3. Befestigungsschiene nach einem der vorhergehenden Ansprüche,
**dadurch gekennzeichnet, dass**
die Seitenwangen (41, 41') verschiedene Paare von Vertikalwänden (47, 47'; 48, 48'; 49, 49') umfassen, die in verschiedenen Abständen voneinander derart auf den Bodenabschnitten (46, 46') befestigt sind, dass zwischen ihnen Ladeeinrichtungen (10, 20, 30) verschiedener Breiten montierbar sind.

4. Befestigungsschiene nach einem der vorhergehenden Ansprüche,
**dadurch gekennzeichnet, dass**
an den Bodenabschnitten (46, 46') insbesondere parallel gegenüber liegend Deckabschnitte (50, 50') an Oberrändern der Seitenwangen (41, 41') befestigt sind.

5. Befestigungsschiene nach einem der vorhergehenden Ansprüche,
**dadurch gekennzeichnet, dass**
die Schienen (40, 40') einstückig ausgebildet, insbesondere als Strangpressprofile gefertigt sind.

6. Befestigungsvorrichtung nach einem der vorhergehenden Ansprüche, insbesondere nach Anspruch 4,
**dadurch gekennzeichnet, dass**
die Deckabschnitte (50, 50') Ausnehmungen aufweisen.

7. Befestigungsschiene nach einem der vorhergehenden Ansprüche, insbesondere nach Anspruch 3,
**dadurch gekennzeichnet, dass**
die Vertikalwände (47, 47'; 48, 48'; 49, 49') Ausnehmungen (52, 52') aufweisen.

8. Befestigungsschiene nach einem der vorhergehenden Ansprüche, insbesondere nach einem der Ansprüche 6 oder 7,
**dadurch gekennzeichnet, dass**
die Ausnehmungen (51, 51') derart ausgebildet sind, dass die Schienen (40, 40') in ihren Abschnitten oberhalb der Bodenabschnitte (43, 43') Außenumrissen der befestigten Ladeeinrichtungen (10, 20, 30) folgend ausgebildet sind.

9. Befestigungsschiene nach einem der vorhergehenden Ansprüche,
**dadurch gekennzeichnet, dass**
die zweiten Befestigungseinrichtungen (46, 46') Montageblöcke (53) umfassen, die einerseits Befestigungseinrichtungen (46, 46') zum Verbinden mit der ersten und der zweiten Schiene (40, 40') und die andererseits Befestigungseinrichtungen aufweisen, welche mit auf dem Ladedeck (1) vorgesehenen Befestigungseinrichtungen (2, 2') verbindbar sind.

10. Befestigungsschiene nach einem der vorhergehenden Ansprüche,
**dadurch gekennzeichnet, dass**
die Vertikalwände (47 - 49') in vorzugsweise regelmäßigen Abständen mit Bohrungen (42) zur wahlweisen Montage von Ladeeinrichtungen (10, 20, 30) versehen sind.

11. Befestigungsschiene nach einem der vorhergehenden Ansprüche,
**dadurch gekennzeichnet, dass**
die erste und die zweite Schiene (40, 40') derart ausgebildet sind, dass die Schienen (40, 40') einen Rahmen für bewegbare Teile einer Ladeeinrichtung, insbesondere einer Rollenantriebseinheit (30) oder eines Riegels (20) derart bilden, dass Drehachsen der Ladeeinrichtungen (20, 30) direkt zwischen den Schienen (40, 40') montierbar sind.

## Claims

1. Fixing rail for attaching loading devices, particularly rollers (10), locking bars (20) or power drive units (30) on a loading deck (1) of an aircraft, comprising a first and a second rail (40, 40'), each rail comprising a cheek (41, 41') with first attachment devices (42, 42'), to which the loading devices (10, 20, 30) can be fixed, and a first floor section (43, 43'), to which the cheek (41, 42') is attached by a lower edge, each first floor section (43, 43') comprising second attachment devices (46, 46'), by means of which the first floor section (43, 43') can be attached to the loading deck (1), the rails (40, 40') with their cheeks (41, 41') separated from each other being mountable on the loading devices (10, 20, 30) in such a way that the rails (40, 40') are connected to each other by means of the loading devices (10, 20, 30) and the loading deck (1), following mounting of the rails (40, 40') to the loading devices (10, 20, 30) and subsequent attaching of the rails (40, 40') to the loading deck (1).

2. Fixing rail according to claim 1,
**characterised in that**
the first attachment devices (42, 42') are constructed in such a way, that the cheeks (41, 41') can be mounted torsionally resistant against each other.

3. Fixing rail, according to one of the previous claims,
**characterised in that**
the cheeks (41, 41') comprise various pairs of vertical walls (47, 47'; 48, 48'; 49, 49'), which are attached at different intervals to the floor sections (46, 46') in such a way that loading devices (10, 20, 30) of various widths can be mounted between them.

4. Fixing rail according to one of the previous claims,
**characterised in that**
on the floor sections (46, 46'), top sections (50, 50'), particularly lying parallel opposite, are attached to the upper edges of the cheeks (41, 41').

5. Fixing rail according to one of the previous claims,
**characterised in that**
the rails (40, 40') are constructed as a single piece, particularly fabricated as extruded profiles.

6. Attachment device according to one of the previous claims, particularly claim 4,
**characterised in that**
the top sections (50, 50') comprise recesses.

7. Fixing rail according to one of the previous claims, particularly claim 3,
**characterised in that**
the vertical walls (47, 47'; 48, 48'; 49, 49') comprise recesses (52, 52').

8. Fixing rail according to one of the previous claims, particularly according to one of claims 6 or 7,
**characterised in that**
the recesses (51, 51') are constructed in such a way that the rails (40, 40') in their sections above the floor sections (43, 43') follow the external contours of the attached loading devices (10, 20, 30) in their construction.

9. Fixing rail according to one of the previous claims,
**characterised in that**
the second attachment devices (46, 46') comprise mounting blocks (53), which, on the one hand, comprise attachment devices (46, 46') to connect to the first and second rail (40, 40') and, on the other hand, comprise attachment devices, which can be connected to attachment devices (2, 2') provided on the loading deck (1).

10. Fixing rail according to one of the previous claims,
**characterised in that**
the vertical walls (47 - 49') are provided with bores (42), preferably at regular intervals, for the optional mounting of loading devices (10, 20, 30).

11. Fixing rail according to one of the previous claims,
**characterised in that**
the first and second rail (40, 40') are constructed in such a way that the rails (40, 40') form a frame for movable parts of a loading device, particularly a power drive unit (30) or a locking bar (20) in such a way that rotational axes of the loading devices (20, 30) can be mounted directly between the rails (40, 40').

## Revendications

1. Rail de fixation destiné à la fixation de dispositifs de chargement, notamment des galets (10), des dispositifs de verrouillage (20) ou des dispositifs d'entraînement de galets (30), sur un pont de chargement (1) d'un avion, comprenant un premier et un deuxième rails (40, 40'), chacun de ces rails présentant une joue latérale (41, 41') avec des premiers dispositifs de fixation (42, 42'), sur lesquels peuvent être rapportés les dispositifs de chargement (10, 20, 30), et une première base (43, 43') à laquelle la joue latérale (41, 41') est fixée par un bord inférieur, chaque première base (43, 43') présentant des deuxièmes dispositifs de fixation (46, 46') permettant de fixer la première base (43, 43') sur le pont de chargement les rails (40, 40') pouvant être montés séparément l'un de l'autre contre les dispositifs de chargement (10, 20, 30) par leurs joues latérales (41, 41') de telle manière que les rails (40, 40'), après montage desdits rails (40, 40') contre les dispositifs de chargement (10, 20, 30) puis fixation desdits rails (40, 40') sur le pont de chargement (1), sont reliés entre eux via lesdits dispositifs de chargement (10, 20, 30) et le pont de chargement (1).

2. Rail de fixation selon la revendication 1, **caractérisé en ce que** les premiers dispositifs de fixation (42, 42') sont conçus de telle manière que les joues latérales (41, 41') peuvent être montées rigides en torsion l'une par rapport à l'autre.

3. Rail de fixation selon l'une quelconque des revendications précédentes, **caractérisé en ce que** les joues latérales (41, 41') comportent différentes paires de parois verticales (47, 47' ; 48, 48' ; 49, 49') qui sont fixées sur les bases (43, 43') en étant plus ou moins espacées entre elles de telle manière qu'il est possible de monter entre elles des dispositifs de chargement (10, 20, 30) de différentes largeurs.

4. Rail de fixation selon l'une quelconque des revendications précédentes, **caractérisé en ce que** des éléments de recouvrement (50, 50') sont fixés aux bords supérieurs des joues latérales (41, 41') au niveau des bases (43, 43'), notamment parallèlement et en regard de celles-ci.

5. Rail de fixation selon l'une quelconque des revendications précédentes, **caractérisé en ce que** les rails (40, 40') sont formés monoblocs, notamment réalisés sous la forme de profilés extrudés.

6. Rail de fixation selon l'une quelconque des revendications précédentes, notamment selon la revendication 4, **caractérisé en ce que** les éléments de recouvrement (50, 50') présentent des évidements.

7. Rail de fixation selon l'une quelconque des revendications précédentes, notamment selon la revendication 3, **caractérisé en ce que** les parois verticales (47, 47' ; 48, 48' ; 49, 49') présentent des évidements (52, 52').

8. Rail de fixation selon l'une quelconque des revendications précédentes, notamment selon l'une des revendications 6 et 7, **caractérisé en ce que** les évidements (51, 51') sont conçus de telle manière que les rails (40, 40') sont conformés, dans leurs portions situées au-dessus des bases (43, 43'), pour suivre les contours extérieurs des dispositifs de chargement (10, 20, 30) fixés.

9. Rail de fixation selon l'une quelconque des revendications précédentes, **caractérisé en ce que** les deuxièmes dispositifs de fixation (46, 46') comprennent des blocs de montage (53) qui présentent d'une part des dispositifs de fixation (46, 46') destinés à assurer la liaison avec le premier et le deuxième rails (40, 40') et d'autre part des dispositifs de fixation qui peuvent être reliés à des dispositifs de fixation (2, 2') prévus sur le pont de chargement (1).

10. Rail de fixation selon l'une quelconque des revendications précédentes, **caractérisé en ce que** les parois verticales (47 à 49') présentent à intervalles de préférence réguliers des perçages (42) destinés à recevoir indifféremment l'un quelconque des dispositifs de chargement (10, 20, 30).

11. Rail de fixation selon l'une quelconque des revendications précédentes, **caractérisé en ce que** le premier et le deuxième rails (40, 40') sont conçus de manière à former un cadre pour des pièces mobiles d'un dispositif de chargement, notamment d'un dispositif d'entraînement de galets (30) ou d'un dispositif de verrouillage (20) de telle sorte que les axes de rotation des dispositifs de chargement (20, 30) peuvent être montés directement entre les rails (40, 40').
